# EUROPÄISCHE PATENTSCHRIFT

(11) **EP 2 896 301 B1**
(45) Veröffentlichungstag und Bekanntmachung des Hinweises auf die Patenterteilung: **29.06.2016**
(21) Anmeldenummer: 15151189.6
(22) Anmeldetag: 14.01.2015
(51) Int. Cl.: A23L 33/10, A23L 33/125, A23L 33/17, A23L 33/21

(54) **PULVERFÖRMIGE ZUSAMMENSETZUNG ZUR HERSTELLUNG EINES NAHRUNGSMITTELERSATZES**
POWDER COMPOSITION FOR THE MANUFACTURE OF A FOOD SUBSTITUTE
COMPOSITION EN POUDRE DESTINÉE À LA FABRICATION D'UN SUBSTITUT DE PRODUIT ALIMENTAIRE

(30) Priorität: 17.01.2014 DE 102014100534
(43) Veröffentlichungstag der Anmeldung: 22.07.2015
(73) Patentinhaber: PM-International AG, 5445 Schengen (LU)
(72) Erfinder: Sorg, Rolf, 5444 Schengen (LU); Kühne, Tobias, Dr., 54497 Morbach (DE); Iken, Marcus, Dr., 67105 Schifferstadt (DE); Lauinger, Christian, 76275 Ettlingen (DE); Messer, Wilhelm, 67058 Bad Dürkheim (DE)
(74) Vertreter: Zech, Stefan Markus

(56) Entgegenhaltungen:
- EP-A2- 1 186 294
- WO-A1-2005/067952
- DE-A1-102004 052 800
- DE-U1-202014 100 439
- US-A1- 2004 096 547

## Beschreibung

Die Erfindung betrifft eine pulverförmige Zusammensetzung zur Herstellung eines Nahrungsmittelersatzes unter Zugabe einer Flüssigkeit, wobei die pulverförmige Zusammensetzung Proteine in Form von Milcheiweiß und/oder Magermilchpulver sowie Kohlenhydrate in Form von Sacchariden und/oder Inulin umfasst. Derartige pulverförmige Zusammensetzungen sind an sich bekannt und werden oftmals zur Herstellung eines "Shakes" angeboten. Sie werden anstelle einer normalen Mahlzeit von den Abnehmern eingenommen, vorrangig mit dem Ziel einer Körpergewichtsreduzierung bzw. eines bewussten Körpergewichtsmanagements.

Dokument US 2004/0096547 A1 beschreibt ein Getränk, das Zucker, Yerba Mate und Molkenproteinisolat enthält.

Dokument EP 1 1 86294 A2 beschreibt ein Nahrungsmittel, das Chlorogensäure, Fructose und Milcheiweiß enthält.

Dokument WO 2005/067952 A1 beschreibt eine Zusammensetzung zur Obesitätbehandlung, die Yerba Mate und Guarana (Chlorogensäure) enthält. Dokument DE 10 2004 052 800 beschreibt eine Trockenaromaformulierung, die Saccharide und Pflanzenextrakte enthält.

Die Aufgabe der vorliegenden Erfindung besteht darin, dieses Gewichtsmanagement, insbesondere die angestrebte Gewichtsreduzierung noch weiter zu unterstützten bzw. zu verbessern.

Diese Aufgabe wird mit einer pulverförmigen Zusammensetzung zur Herstellung eines Nahrungsmittelersatzes unter Zugabe einer Flüssigkeit nach den Merkmalen des Anspruchs 1 gelöst.

Konkret wird eine pulverförmige Zusammensetzung zur Herstellung eines Nahrungsmittelersatzes unter Zugabe einer Flüssigkeit vorgeschlagen, wobei die pulverförmige Zusammensetzung Proteine in Form von Milcheiweiß und/oder Magermilchpulver, Kohlenhydrate in Form von Sacchariden und/oder Inulin und darüber hinaus Chlorogensäure zur Unterstützung des Stoffwechsels, Brennesselextrakt sowie Mate-Extrakt und/oder Mate-Tee umfasst.

Es hat sich überraschenderweise gezeigt, dass sich Chlorogensäure hervorragend als weiterer funktioneller Bestandteil einer pulverförmigen Zusammensetzung zur Herstellung eines Nahrungsmittelersatzes unter Zugabe einer Flüssigkeit eignet. Die Chlorogensäure - vielfach auch als Grüner Kaffeebohnen-Ersatz bezeichnet - kann den Stoffwechsel unterstützen und insoweit zum angestrebten Gewichtsmanagement, insbesondere der Gewichtsreduzierung, positiv beitragen. Insbesodere scheint es, dass Chlorogensäure den Glucose- und Fettstoffwechsel positiv unterstützt bzw. die Gewichtszunahme hemmt. Darüber hinaus wird der Chlorogensäure (dem Grünen Kaffeebohnen-Extrakt) eine starke antioxidative Wirkung zugesprochen.

Die pulverförmige Zusammensetzung nach der vorliegenden Erfindung enthält weiterhin Brennesselextrakt und Mate-Extrakt und/oder Mate-Tee. Die Beimengung von Brennesselextrakt wird als vorteilhaft angesehen. Dem Brennesselextrakt kommt ein entwässernder Effekt zu. Darüber hinaus scheint Brennesselextrakt stoffwechselanregend und wohl auch leistungssteigernd bzw. hungerstillend zu wirken. Mate-Extrakt bzw. Mate-Tee ist reich an Flavonoiden und sorgt für eine Verbesserung des Harnflusses. Weiterhin werden Mate aktivierende und kreislaufstärkende Eigenschaften zugeschrieben. Auch soll Mate stoffwechselanregend wirken.

In einer vorteilhaften Weiterbildung kann die pulverförmige Zusammensetzung weiterhin Proteine, insbesondere in Form von Aminosäuren, wie Leucin, Isoleucin, Phenylalanin, Methionin, Cystein, Cystin, Serin, Arginin, Glycin, Prolin, Alanin, Asparaginsäure, Asparagin, Glutaminsäure, Glutamin, Histidin, Tyorsin, Valin, Lysin, Phenylalanin, Theronin und/oder Tryptophan enthalten.

Bei einigen der genannten Aminosäuren handelt es sich um sog. essentielle Aminosäuren, d.h. sie sind lebensnotwendig für den menschlichen Organismus, obwohl der menschliche Körper sie nicht aus elementaren Bestandteilen selbst aufbauen kann. Während z.B. autotrophe Organismen fähig sein können, die benötigten Aminosäuren selbst aus elementaren Bestandteilen aufzubauen, ist es beim Menschen dagegen unerlässlich, dass die essentiellen Aminosäuren über die Nahrung aufgenommen werden.

Leucin ist insbesondere wichtig für den Aufbau und Erhalt von Muskelgewebe. Es dient als Energielieferant und unterstützt Heilungsprozesse.

Isoleucin ist ebenfalls von Bedeutung für Muskelaufbau und als Energielieferant. Darüber hinaus wurden aber in verschiedenen Gebieten der Medizin vorteilhafte Eigenschaften von Isoleucin nachgewiesen, z.B. bei Störungen des Magen-Darm-Trakts.

Valin ist von besonderer Bedeutung für das Wachstum von neuem Gewebe und hilft bei dem Wiederaufbau von Gewebe z.B. nach Überlastung oder bei Verletzungen. Darüber hinaus wurde gezeigt, dass ein Mangel an Valin das menschliche Nervensystem und das Gehirn beeinträchtigen kann.

Lysin wirkt auf die Serotoninrezeptoren im Verdauungstrakt. In verschiedenen Studien wurde gezeigt, dass Lysin daher hilfreich ist bei der Behandlung von Angstzuständen. Es kann leicht beruhigend wirken, insbesondere bei Angstzuständen, die anderweitig nicht zu erklären sind. Darüber hinaus wurden Lysinkonjugate erfolgreich in der Krebstherapie eingesetzt, wo die Lysinkonjugate eine Selbstzerstörung von Krebszellen verursachen können. In Tierstudien wurde gezeigt, dass ein Mangel an Lysin zu einer Schwächung der Immunabwehr führen kann.

Phenylalanin hat eine schmerzstillende sowie antidepressive Wirkung. Hierbei werden insbesondere Gemische aus D-Phenylalanin und L-Phenylalanin verwendet. Der Bedarf des menschlichen Organismus an Phenylalanin ist u.a. vom Thyrosingehalt der Nahrung abhängig. Insbesondere bei einem Mangel an Thyrosin ist eine ausreichende Versorgung mit Phenylalanin von großer Bedeutung.

Unter den essentiellen Aminosäuren wurde Threonin als letztes entdeckt und auf die Wirkungsweise untersucht. Es ist davon auszugehen, dass viele vorteilhafte Eigenschaften von Threonin erst in den nächsten Jahren entdeckt werden. Tryptophan wurde erfolgreich zur Reduktion von Übergewicht verwendet. Darüber hinaus kann es, da es im menschlichen Körper zu Serotonin umgewandelt wird, stimmungsaufhellende Wirkung haben.

Hinsichtlich vorteilhafter Mengenverhältnisse der genannten Aminosäuren sowie einer vorteilhaften Einwirkung auf die Resorption wird auf das erteilte Patent EP 2 508 082 verwiesen.

Es erscheint vorteilhaft, der pulverförmigen Zusammensetzung auch Zink und/oder Vitamin B2 (Riboflavin) beizumengen. Zink dient der Unterstützung des Glucose- und Fettstoffwechsels. Vitamin B2 (Riboflavin) trägt zur Verringerung von Müdigkeit und Ermüdung bei.

Bevorzugtermaßen umfassen die Kohlenhydrate in Form von Sacchariden Maltodextrin und/oder Zucker (Rohr-Zucker) und/oder Fructose.

Die pulverförmige Zusammensetzung kann darüber hinaus weiterhin Inulin und/oder Geschmacksstoffe und/oder Farbstoffe enthalten.

Bevorzugtermaßen ist die pulverförmige Zusammensetzung vorgesehen als Mahlzeitenersatz in einer Menge von 40 bis 50 g mit 300 ml Flüssigkeit, insbesondere Milch, bevorzugtermaßen Milch mit 1,5 % Fettanteil, vorzugsweise 1- bis 2-mal täglich, angesetzt und eingenommen zu werden. In der Phase der angestrebten Gewichtsabnahme kann sich der Ersatz zweier Mahlzeiten pro Tag, mithin eine zweimalige Einnahme der pulverförmigen Zusammensetzung empfehlen. In der Gewichts-Stabilisierungsphase ist u.U. ein Mahlzeitenersatz mit einer einmaligen Einnahme der pulverförmigen Zusammensetzung nach der Erfindung ausreichend.

Hinsichtlich der erfindungsgemäß enthaltenen Chlorogensäure erscheint eine Konzentration bezogen auf eine Pulvermenge von 100 g von 0,1 g bis 2,5 g, vorzugsweise 0,3 g bis 1,5 g, insbesondere 0,8 g bis 1,3 g als vorteilhaft.

In einer konkreten Ausgestaltung ist bezogen auf eine Pulvermenge von 100 g bevorzugtermaßen Milcheiweiß in einer Konzentration von 15 g bis 35 g, vorzugsweise von 20 g bis 30 g, insbesondere von etwa 25 g und/oder Magermilchpulver in einer Konzentration von 8 g bis 35 g, vorzugsweise in einer Konzentration von 15 g bis 25 g, insbesondere in einer Konzentration von etwa 22 g und/oder Kohlenhydrate in Form von Sacchariden in einer Konzentration von 20 bis 35 g, vorzugsweise 25 g bis 35 g, insbesondere in einer Konzentration von etwa 30 g und/oder Brennesselextrakt in einer Konzentration von 0,15 g bis 0,5 g, vorzugsweise in einer Konzentration von 0,2 g bis 0,4 g, insbesondere in einer Konzentration von ungefähr 0,3 g und/oder Mate-Extrakt in einer Konzentration von 0,15 g bis 0,5 g, vorzugsweise in einer Konzentration von 0,2 g bis 0,4 g, insbesondere in einer Konzentration von ungefähr 0,3 g und/oder Zink in Form von Zinkglyconat in einer Konzentration von 20 mg bis 80 mg, vorzugsweise 30 mg bis 65 mg, insbesondere in einer Konzentration von etwa 50 mg und/oder Vitamin B2 (Riboflavin) in einer Konzentration von 0,4 mg bis 1,3 mg, vorzugsweise in einer Konzentration von 0,5 mg bis 1,1 mg enthalten.

Die pulverförmige Zusammensetzung kann weiterhin noch Ascorbinsäure und/oder Niacin und/oder alpha-Tocopherol und/oder Mangangluconat und/oder Pantothensäure und/oder Vitamin A und/oder Ascorbylpalmitat und/oder ein Emulgator, beispielsweise Sojalecithin, und/oder Vitamin B6 und/oder Vitamin D und/oder Vitamin B1 und/oder Vitamin B12 und/oder Folsäure und/oder Kaliumiodid und/oder Natriumselenit und/oder Biotin und/oder Säuerungsmittel, beispielsweise in Form von Citronensäure, enthalten.

In einer bevorzugten Ausgestaltung ist bezogen auf eine Pulvermenge von 100 g Ascorbinsäure in einer Konzentration von 20 mg bis 50 mg, bevorzugtermaßen 30 mg bis 40 mg und/oder Niacin in einer Konzentration von 5 mg bis 20 mg, bevorzugtermaßen in einer Konzentration von 10 mg bis 18 mg und/oder alpha-Tocopherol in einer Konzentration von 15 mg bis 40 mg, bevorzugtermaßen in einer Konzentration von 20 mg bis 30 mg und/oder Mangangluconat in einer Konzentration von 3 mg bis 15 mg, bevorzugtermaßen in einer Konzentration von 5 mg bis 11 mg, und/oder Pantothensäure in einer Konzentration von 1,5 mg bis 8 mg, bevorzugtermaßen in einer Konzentration von 2 mg bis 4 mg, und/oder Vitamin A in einer Konzentration von 3 mg bis 10 mg, bevorzugter-maßen in einer Konzentration von 5 mg bis 8 mg, und/oder ein Emulgator, beispielsweise Sojalecithin in einer Konzentration von 1 mg bis 5 mg, bevorzugtermaßen in einer Konzentration von 1,5 mg bis 4 mg, und/oder Vitamin B6 in einer Konzentration von 0,5 mg bis 5 mg, vorzugsweise in einer Konzentration von 1 mg bis 4 mg, und/oder Vitamin B1 in einer Konzentration von 0,4 mg bis 4 mg, bevorzugtermaßen in einer Konzentration von 0,7 mg bis 1,5 mg und/oder Vitamin B12 in einer Konzentration von 200 µg bis 1,2 mg, vorzugsweise in einer Konzentration von 400 µg bis 800 µg, und/oder Folsäure in einer Konzentration von 50 µg bis 400 µg, bevorzugtermaßen in einer Konzentration von 100 µg bis 300 µg, und/oder Kaliumiodid in einer Konzentration von 30 µg bis 300 µg, vorzugsweise in einer Konzentration von 80 µg bis 200 µg, und/oder Natriumselenit in einer Konzentration von 30 µg bis 300 µg, bevorzugtermaßen in einer Konzentration von 50 µg bis 200 µg, und/oder Biotin in einer Konzentration von 5 µg bis 200 µg, bevorzugtermaßen in einer Konzentration von 20 µg bis 60 µg, und/oder Säuerungsmittel, beispielsweise in Form von Citronensäure, in einer Konzentration von 20 µg bis 100 µg, bevorzugtermaßen in einer Konzentration von 30 µg bis 70 µg, enthalten.

In einer möglichen Ausgestaltung ist bezogen auf eine Pulvermenge von 100 g Maltodextrin in einer Konzentration von 8 g bis 20 g, vorzugsweise in einer Konzentration von 12 g bis 17 g, und/oder Zucker (Rohr-Zucker) in einer Konzentration von 5 g bis 20 g, vorzugsweise in einer Konzentration von 10 g bis 15 g, und/oder Fructose in einer Konzentration von 1 g bis 5 g, vorzugsweise in einer Konzentration von 2 g bis 4 g enthalten.

Die pulverförmige Zusammensetzung kann in unterschiedlichen Geschmacksrichtungen angeboten werden, beispielsweise in der Geschmacksrichtung Schokolade oder Geschmacksrichtung Vanille. Zur Erzielung einer Geschmacksrichtung Schokolade kann die pulverförmige Zusammensetzung Kakaopulver, vorzugsweise stark entölt, und zur Erzielung einer Geschmacksrichtung Vanille gemahlene Bourbon-Vanilleschote enthalten.

Nachfolgend wird noch ein Ausführungsbeispiel für die vorliegende erfindungsgemäße pulverförmige Zusammensetzung angegeben.

**Ausführungsbeispiel: Pulverförmige Zusammensetzung zur Herstellung eines Nahrungsmittelersatzes in Geschmacksrichtung Bourbon Vanille**

| Bestandteile | **auf 100 g** |
|---|---|
| Milcheiweiß | 28 g |
| Magermilchpulver | 16,2 g |
| Maltodextrin | 17 g |
| Zucker | 9,8 g |
| Verdichtungsmittel: Garkernmehl | 5,6 g |
| Pektin | 0,88 g |
| Sojaöl | 7,2 g |
| Fructose | 5,1 g |
| Aroma (mit Milch, Lactose) | 3,2 g |
| Inulin | 1,6 g |
| Chlorogensäure (Grüner Kaffeebohnen-Extrakt) | 1,3 g |
| Bananenpulver | 0,41 g |
| Kaliumcitrat | 0,59 g |
| Haferkleie (enthält Gluten) | 0,47 g |
| Salz | 0,11 g |
| Weizenfaser (enthält Gluten) | 0,40 g |
| Magnesiumcarbonat x 5 H₂O | 0,40 g |
| Grüner Mate-Extrakt | 0,40 g |
| Brennnesselextrakt | 0,45 g |
| Farbstoff: Betacarotin (1 % auf Träger) | 137 mg |
| (= 1,16 mg Betacarotin) | |
| Papayapulver | 110 mg |
| Natriumhydrogencarbonat | 110 mg |
| Süßstoffe: Acesulfam K | 72 mg |
| Sucralose | 25 mg |
| Gemahlene Bourbon-Vanilleschote | 100 mg |
| Eisen(III)-Diphosphat | 83 mg |
| Ananaspulver (Ananaspulver, Maltodextrin) | 60 mg |
| Zinkgluconat | 61 mg |
| L-Ascorbinsäure (Vitamin C) | 31 mg |
| Alpha-Tocopherylacetat | 30 mg |
| Niacin | 18 mg |
| Magangluconat | 10,2 mg |
| Kupfergluconat | 8,4 mg |
| Vitamin A | 7,9 mg |
| Ascorbylpalmitat | 3,7 mg |
| Tocopherol | 3,2 mg |
| Pantothensäure | 2,1 mg |
| Emulgator: Sojalecithin | 2,4 mg |
| Vitamin B6 | 1,9 mg |
| Vitamin D | 1,9 mg |
| Vitamin B1 | 0,9 mg |
| Riboflavin (Vitamin B2) | 1,1 mg |
| Vitamin B12 | 620 µg |
| Folsäure | 120 µg |
| Kaliumiodid | 80 µg |
| Natriumselenit | 104 µg |
| Säuerungsmittel: Citronensäure | 67 µg |
| D-Biotin | 51 µg |

In einer kurzen Anwendungsbeobachtung hat sich gezeigt, dass Probanden, die die pulverförmige Zusammensetzung nach dem Ausführungsbeispiel 1 zweimal täglich als Mahlzeitenersatz zu sich genommen haben, im Durchschnitt 4,3 kg innerhalb von 4 Wochen abgenommen haben.

Innerhalb der durch das Milcheiweiß (28 g) und das Magermilchpulver (16,2 g) vorgegebenen Proteine sind Aminosäuren mit 33 g auf 100 g Pulvermenge wie folgt verteilt enthalten:

| **Aminosäuren** | **33 g auf 100 g Pulvermenge** |
|---|---|
| Leucin | 3,1 g |
| Isoleucin | 1,7 g |
| Phenylalanin | 1,5 g |
| Lysin | 2,4 g |
| Threonin | 1,3 g |
| Valin | 2,1 g |
| Methionin | 0,9 g |
| Typtophan | 0,5 g |
| Cystein + Cystin | 0,1 g |
| Serin | 1,7 g |
| Arginin | 1,2 g |
| Glycin | 0,6 g |
| Prolin | 3,4 g |
| Alanin | 1,0 g |
| Asparaginsäure + Asparagin | 2,1 g |
| Glutaminsäure + Glutamin | 6,8 g |
| Histidin | 0,9 g |
| Tyrosin | 1,7 g |

## Patentansprüche

1. Pulverförmige Zusammensetzung zur Herstellung eines Nahrungsmittelersatzes unter Zugabe einer Flüssigkeit,
wobei die pulverförmige Zusammensetzung
Proteine in Form von
- Milcheiweiß und/oder Magermilchpulver,
- Kohlenhydrate in Form von Sacchariden und/oder Inulin sowie
- Chlorogensäure zur Unterstützung des Stoffwechsels
- Brennesselextrakt und
- Mate-Extrakt und/oder Mate-Tee
umfasst.

2. Pulverförmige Zusammensetzung nach Anspruch 1, **dadurch gekennzeichnet, dass** weiterhin Proteine, insbesondere in Form von Aminosäuren, wie Leucin, Isoleucin, Valin, Lysin, Phenylalanin, Threonin, Phenylalanin, Methionin, Cystein, Cystin, Serin, Arginin, Glycin, Prolin, Alanin, Asparaginsäure, Asparagin, Glutaminsäure, Glutamin, Histidin, Tyorsin und/oder Tryptophan enthalten sind.

3. Pulverförmige Zusammensetzung nach einem der Ansprüche 1 oder 2, **dadurch gekennzeichnet, dass** weiterhin
- Zink zur Unterstützung des Glukose- und Fettstoffwechsels und/oder
- Vitamin B2 (Riboflavin) zur Verringerung von Müdigkeit und Ermüdung enthalten sind.

4. Pulverförmige Zusammensetzung nach einem der Ansprüche 1 bis 3, **dadurch gekennzeichnet, dass** die Kohlenhydrate in Form von Sacchariden
- Maltodextrin und/oder
- Zucker (Rohr-Zucker) und/oder
- Fructose
umfassen.

5. Pulverförmige Zusammensetzung nach einem der Ansprüche 1 bis 4, **dadurch gekennzeichnet, dass** weiterhin Inulin und/oder Geschmacksstoffe und/oder Farbstoffe enthalten sind.

6. Pulverförmige Zusammensetzung nach einem der Ansprüche 1 bis 5, **dadurch gekennzeichnet, dass** die pulverförmige Zusammensetzung vorgesehen ist, als Mahlzeitenersatz in einer Menge von 40 bis 50 g mit 300 ml Flüssigkeit, insbesondere Milch, vorzugsweise 1- bis 2-mal täglich, angesetzt und eingenommen zu werden.

7. Pulverförmige Zusammensetzung nach einem der Ansprüche 1 bis 6, **dadurch gekennzeichnet, dass** bezogen auf eine Pulvermenge von 100 g die Menge an Chlorogensäure 0,01 g bis 2,5 g, vorzugsweise 0,3 g bis 1,5 g, insbesondere 0,8 g bis 1,2 g beträgt.

8. Pulverförmige Zusammensetzung nach einem der Ansprüche 1 bis 7, **dadurch gekennzeichnet, dass** bezogen auf eine Pulvermenge von 100 g
- Milcheiweiß in einer Konzentration von 15 g bis 35 g, vorzugsweise von 20 g bis 30 g, insbesondere von etwa 25 g und/oder
- Magermilchpulver in einer Konzentration von 8 g bis 35 g, vorzugsweise in einer Konzentration von 15 g bis 25 g, insbesondere in einer Konzentration von etwa 22 g und/oder
- Kohlenhydrate in Form von Sacchariden in einer Konzentration von 20 g bis 35 g, vorzugsweise 25 g bis 35 g, insbesondere in einer Konzentration von etwa 30 g,
- Brennesselextrakt in einer Konzentration von 0,15 g bis 0,5 g, vorzugsweise in einer Konzentration von 0,2 g bis 0,4 g, insbesondere in einer Konzentration von ungefähr 0,3 g,
- Mate-Extrakt in einer Konzentration von 0,15 g bis 0,5 g, vorzugsweise in einer Konzentration von 0,2 g bis 0,4 g, insbesondere in einer Konzentration von ungefähr 0,3 g
- und/oder Zink in Form von Zinkglyconat in einer Konzentration von 20 mg bis 80 mg, vorzugsweise 30 mg bis 65 mg, insbesondere in einer Konzentration von etwa 50 mg
- und/oder Vitamin B2 (Riboflavin) in einer Konzentration von 0,4 mg bis 1,3 mg, vorzugsweise in einer Konzentration von 0,5 mg bis 1,1 mg enthalten ist.

9. Pulverförmige Zusammensetzung nach einem der Ansprüche 1 bis 8, **dadurch gekennzeichnet, dass** weiterhin
- Ascorbinsäure und/oder
- Niacin und/oder
- alpha-Tocopherol und/oder
- Mangangluconat und/oder
- Pantothensäure und/oder
- Vitamin A und/oder
- Ascorbylpalmitat und/oder
- ein Emulgator, beispielsweise Sojalecithin, und/oder
- Vitamin B6 und/oder
- Vitamin D und/oder
- Vitamin B1 und/oder
- Vitamin B12 und/oder
- Folsäure und/oder
- Kaliumiodid und/oder
- Natriumselenit und/oder
- Biotin und/oder
- Säuerungsmittel, beispielsweise in Form von Citronensäure, enthalten ist.

10. Pulverförmige Zusammensetzung nach Anspruch 9, **dadurch gekennzeichnet, dass** bezogen auf eine Pulvermenge von 100 g
- Ascorbinsäure in einer Konzentration von 20 mg bis 50 mg, bevorzugtermaßen 30 mg bis 40 mg und/oder
- Niacin in einer Konzentration von 5 mg bis 20 mg, bevorzugtermaßen in einer Konzentration von 10 mg bis 18 mg und/oder
- alpha-Tocopherol in einer Konzentration von 15 mg bis 40 mg, bevorzugtermaßen in einer Konzentration von 20 mg bis 30 mg und/oder
- Mangangluconat in einer Konzentration von 3 mg bis 15 mg, bevorzugtermaßen in einer Konzentration von 5 mg bis 11 mg, und/oder
- Pantothensäure in einer Konzentration von 1,5 mg bis 8 mg, bevorzugtermaßen in einer Konzentration von 2 mg bis 4 mg, und/oder
- Vitamin A in einer Konzentration von 3 mg bis 10 mg, bevorzugtermaßen in einer Konzentration von 5 mg bis 8 mg, und/oder
- ein Emulgator, beispielsweise Sojalecithin in einer Konzentration von 1 mg bis 5 mg, bevorzugtermaßen in einer Konzentration von 1,5 mg bis 4 mg, und/oder
- Vitamin B6 in einer Konzentration von 0,5 mg bis 5 mg, vorzugsweise in einer Konzentration von 1 mg bis 4 mg, und/oder
- Vitamin B1 in einer Konzentration von 0,4 mg bis 4 mg, bevorzugtermaßen in einer Konzentration von 0,7 mg bis 1,5 mg und/oder
- Vitamin B12 in einer Konzentration von 200 µg bis 1,2 mg, vorzugsweise in einer Konzentration von 400 µg bis 800 µg, und/oder
- Folsäure in einer Konzentration von 50 µg bis 400 µg, bevorzugtermaßen in einer Konzentration von 100 µg bis 300 µg, und/oder
- Kaliumiodid in einer Konzentration von 30 µg bis 300 µg, vorzugsweise in einer Konzentration von 80 µg bis 200 µg, und/oder
- Natriumselenit in einer Konzentration von 30 µg bis 300 µg, bevorzugtermaßen in einer Konzentration von 50 µg bis 200 µg, und/oder
- Biotin in einer Konzentration von 5 µg bis 200 µg, bevorzugtermaßen in einer Konzentration von 20 µg bis 60 µg, und/oder
- Säuerungsmittel, beispielsweise in Form von Citronensäure, in einer Konzentration von 20 µg bis 100 µg, bevorzugtermaßen in einer Konzentration von 30 µg bis 70 µg,
enthalten sind.

11. Pulverförmige Zusammensetzung nach einem der Ansprüche 1 bis 10, **dadurch gekennzeichnet, dass** bezogen auf eine Pulvermenge von 100 g
- Maltodextrin in einer Konzentration von 8 g bis 20 g, vorzugsweise in einer Konzentration von 12 g bis 17 g, und/oder
- Zucker (Rohr-Zucker) in einer Konzentration von 5 g bis 20 g, vorzugsweise in einer Konzentration von 10 g bis 15 g, und/oder
- Fructose in einer Konzentration von 1 g bis 5 g, vorzugsweise in einer Konzentration von 2 g bis 4 g,
enthalten ist.

12. Pulverförmige Zusammensetzung nach einem der Ansprüche 1 bis 11, **dadurch gekennzeichnet, dass**
- entweder Kakaopulver, vorzugsweise stark entölt, zur Erzielung einer Geschmacksrichtung Schokolade
- oder gemahlene Bourbon-Vanilleschote zur Erzielung einer Geschmackrichtung Vanille
enthalten ist.

## Claims

1. A powdery composition for preparing a food substitute with the addition of liquid,
wherein the powder-shaped composition comprises proteins in the form of
- milk protein and/or skimmed milk powder,
- carbohydrates in the form of saccharides and/or inulin, as well as
- chlorogenic acid for supporting the metabolism,
- stinging nettle extract, and
- mate extract and/or mate tea.

2. The powdery composition according to claim 1, **characterized in that** furthermore proteins are contained optionally in the form of amino acids such as leucine, isoleucine, valine, lysine, phenylalanine, threonine, phenylalanine, methionine, cysteine, cystine, serine, arginine, glycine, proline, alanine, aspartic acid, glutamic acid, glutamine, histidine, tyrosine and/or tryptophan.

3. The powdery composition according to any one of claims 1 or 2, **characterized in that** furthermore are contained
- zinc for supporting the glucose or fat metabolism and/or
- vitamin B2 (riboflavin) for reducing tiredness and fatigue.

4. The powdery composition according to any one of claims 1 to 3, **characterized in that** the carbohydrates in the form of saccharides comprise
- maltodextrin, and/or
- sugar (cane sugar), and/or
- fructose.

5. The powdery composition according to any one of claims 1 to 4, **characterized in that** furthermore inulin and/or flavorings and/or colorings are contained.

6. The powdery composition according to any one of claims 1 to 5, **characterized in that** the powder-shaped composition is intended to be mixed and taken as a meal replacement in an amount of 40 to 50 g with 300 ml of liquid, in particular milk, preferably 1 to 2 times a day.

7. The powdery composition according to any one of claims 1 to 6, **characterized in that** with regard to an amount of powder of 100 g, the amount of chlorogenic acid is 0.01 to 2.5 g, preferably 0.3 g to 1.5 g, especially 0.8 g to 1.2 g.

8. The powdery composition according to any one of claims 1 to 7, **characterized in that** with regard to an amount of powder of 100 g
- milk protein is contained in a concentration of 15 g to 35 g, preferably of 20 g to 30 g, especially of about 25 g, and/or
- skimmed milk powder is contained in a concentration of 8 g to 35 g, preferably in a concentration of 15 g to 25 g, especially in a concentration of about 22 g, and/or
- carbohydrates in the form of saccharides are contained in a concentration of 20 g to 35 g, preferably 25 g to 35 g, especially in a concentration of about 30 g,
- stinging nettle extract is contained in a concentration of 0.15 g to 0.5 g, preferably in a concentration of 0.2 g to 0.4 g, especially in a concentration of approximately 0.3 g,
- mate extract is contained in a concentration of 0.15 g to 0.5 g, preferably in a concentration of 0.2 g to 0.4 g, especially in a concentration of approximately 0.3 g,
- and/or zinc in the form of zinc gluconate is contained in a concentration of 20 mg to 80 mg, preferably 30 mg to 65 mg, especially in a concentration of about 50 mg,
- and/or vitamin B2 (riboflavin) is contained in a concentration of 0.4 mg to 1.3 mg, preferably in a concentration of 0.5 mg to 1.1 mg.

9. The powdery composition according to any one of claims 1 to 8, **characterized in that** furthermore
- ascorbic acid, and/or
- niacin, and/or
- alpha-tocopherol, and/or
- manganese gluconate, and/or
- pantothenic acid, and/or
- vitamin A, and/or
- ascorbyl palmitate, and/or
- an emulsifier, for example soya lecithin, and/or
- vitamin B6, and/or
- vitamin D, and/or
- vitamin B1, and/or
- vitamin B12, and/or
- folic acid, and/or
- potassium iodide, and/or
- sodium selenite, and/or
- biotin, and/or
- acidifiers, for example in the form of citric acid,
are contained.

10. The powdery composition according to claim 9, **characterized in that** with regard to an amount of powder of 100 g,
- ascorbic acid is contained in a concentration of 20 mg to 50 mg, preferentially 30 mg to 40 mg, and/or
- niacin is contained in a concentration of 5 mg to 20 mg, preferentially in a concentration of 10 mg to 18 mg, and/or
- alpha-tocopherol is contained in a concentration of 15 mg to 40 mg, preferentially in a concentration of 20 mg to 30 mg, and/or
- manganese gluconate is contained in a concentration of 3 mg to 15 mg, preferentially in a concentration of 5 mg to 11 mg, and/or
- pantothenic acid is contained in a concentration of 1.5 mg to 8 mg, preferentially in a concentration of 2 mg to 4 mg, and/or
- vitamin A is contained in a concentration of 3 mg to 10 mg, preferentially in a concentration of 5 mg to 8 mg, and/or
- an emulsifier, for example soya lecithin, is contained in a concentration of 1 mg to 5 mg, preferentially in a concentration of 1.5 mg to 4 mg, and/or
- vitamin B6 is contained in a concentration of 0.5 mg to 5 mg, preferably in a concentration of 1 mg to 4 mg, and/or
- vitamin B1 is contained in a concentration of 0.4 mg to 4 mg, preferentially in a concentration of 0.7 mg to 1.5 mg, and/or
- vitamin B12 is contained in a concentration of 200 µg to 1,2 mg, preferably in a concentration of 400 µg to 800 µg, and/or
- folic acid is contained in a concentration of 50 µg to 400 µg, preferentially in a concentration of 100 µg to 300 µg, and/or
- potassium iodide is contained in a concentration of 30 µg to 300 µg, preferably in a concentration of 80 µg to 200 µg, and/or
- sodium selenite is contained in a concentration of 30 µg to 300 µg, preferentially in a concentration of 50 µg to 200 µg, and/or
- biotin is contained in a concentration of 5 µg to 200 µg, preferentially in a concentration of 20 µg to 60 µg, and/or
- acidifiers, for example in the form of citric acid, are contained in a concentration of 20 µg to 100 µg, preferentially in a concentration of 30 µg to 70 µg.

11. The powdery composition according to any one of claims 1 to 10, **characterized in that** with regard to an amount of powder of 100 g,
- maltodextrin is contained in a concentration of 8 g to 20 g, preferably in a concentration of 12 g to 17 g, and/or
- sugar (cane sugar) is contained in a concentration of 5 g to 20 g, preferably in a concentration of 10 g to 15 g, and/or
- fructose is contained in a concentration of 1 g to 5 g, preferably in a concentration of 2 g to 4 g.

12. The powdery composition according to any one of claims 1 to 11, **characterized in that**
- either cocoa powder, preferably highly defatted, for obtaining a taste of chocolate,
- or ground bourbon vanilla pod for obtaining a taste of vanilla is contained.

## Revendications

1. Composition en poudre pour la préparation d'un substitut de produit alimentaire incluant l'ajout d'un liquide,
sachant que la composition en poudre comprend des protéines sous forme de
- protéine de lait et/ou lait écrémé en poudre,
- glucides sous forme de saccharides et/ou d'inuline ainsi que
- acide chlorogénique pour renforcer le métabolisme
- extrait d'ortie et
- extrait de maté et/ou thé de maté.

2. Composition en poudre selon la revendication 1, **caractérisée en ce que** sont contenues en outre des protéines, en particulier sous forme d'acides aminés, comme la leucine, l'isoleucine, la valine, la lysine, la phénylalanine, la thréonine, la phénylalanine, la méthionine, la cystéine, la cystine, la sérine, l'arginine, la glycine, la proline, l'alanine, l'acide aspartique, l'acide glutamique, la glutamine, l'histidine, la tyrosine et/ou le tryptophane.

3. Composition en poudre selon l'une des revendications 1 ou 2, **caractérisée en ce que** sont contenus en outre
- du zinc pour renforcer le métabolisme de glucose et de graisse et/ou
- de la vitamine B2 (riboflavine) pour diminuer la fatigue et la lassitude.

4. Composition en poudre selon l'une des revendications 1 à 3, **caractérisée en ce que** les glucides sous forme de saccharides comprennent
- de la maltodextrine et/ou
- du sucre (sucre de canne) et/ou
- du fructose.

5. Composition en poudre selon l'une des revendications 1 à 4, **caractérisée en ce que** sont contenus en outre de l'inuline et/ou des agents aromatisants et/ou des colorants.

6. Composition en poudre selon l'une des revendications 1 à 5, **caractérisée en ce que** la composition en poudre est prévue pour être préparée et ingérée comme substitut de repas dans une quantité de 40 à 50 g avec 300 ml de liquide, en particulier du lait, de préférence 1 à 2 fois par jour.

7. Composition en poudre selon l'une des revendications 1 à 6, **caractérisée en ce que**, pour une quantité de poudre de 100 g, la quantité d'acide chlorogénique est de 0,01 g à 2,5 g, de préférence de 0,3 g à 1,5 g, en particulier de 0,8 g à 1,2 g.

8. Composition en poudre selon l'une des revendications 1 à 7, **caractérisée en ce que** sont contenus, pour une quantité de poudre de 100 g,
- de la protéine de lait dans une concentration de 15 g à 35 g, de préférence de 20 g à 30 g, en particulier d'environ 25 g et/ou
- du lait écrémé en poudre dans une concentration de 8 g à 35 g, de préférence dans une concentration de 15 g à 25 g, en particulier dans une concentration d'environ 22 g et/ou
- des glucides sous forme de saccharides dans une concentration de 20 g à 35 g, de préférence de 25 g à 35 g, en particulier dans une concentration d'environ 30 g,
- de l'extrait d'ortie dans une concentration de 0,15 g à 0,5 g, de préférence dans une concentration de 0,2 g à 0,4 g, en particulier dans une concentration d'environ 0,3 g,
- de l'extrait de maté dans une concentration de 0,15 g à 0,5 g, de préférence dans une concentration de 0,2 g à 0,4 g, en particulier dans une concentration d'environ 0,3 g,
- et/ou du zinc sous forme de gluconate de zinc dans une concentration de 20 mg à 80 mg, de préférence de 30 mg à 65 mg, en particulier dans une concentration d'environ 50 mg,
- et/ou de la vitamine B2 (riboflavine) dans une concentration de 0,4 mg à 1,3 mg, de préférence dans une concentration de 0,5 mg à 1,1 mg.

9. Composition en poudre selon l'une des revendications 1 à 8, **caractérisée en ce que** sont contenus en outre
- de l'acide ascorbique, et/ou
- de la niacine, et/ou
- de l'alpha-tocophérol, et/ou
- du gluconate de manganèse, et/ou
- de l'acide pantothénique, et/ou
- de la vitamine A, et/ou
- du palmitate d'ascorbyle, et/ou
- un émulsifiant, de préférence de la lécithine de soja, et/ou
- de la vitamine B6, et/ou
- de la vitamine D, et/ou
- de la vitamine B1, et/ou
- de la vitamine B12, et/ou
- de l'acide folique, et/ou
- de l'iodure de potassium, et/ou
- du sélénite de sodium, et/ou
- de la biotine, et/ou
- de l'acidifiant, par exemple sous forme d'acide citrique.

10. Composition en poudre selon la revendication 9, **caractérisée en ce que** sont contenus, pour une quantité en poudre de 100 g,
- de l'acide ascorbique dans une concentration de 20 mg à 50 mg, de manière préférentielle de 30 mg à 40 mg, et/ou
- de la niacine dans une concentration de 5 mg à 20 mg, de manière préférentielle dans une concentration de 10 mg à 18 mg, et/ou
- de l'alpha-tocophérol dans une concentration de 15 mg à 40 mg, de manière préférentielle dans une concentration de 20 mg à 30 mg, et/ou
- du gluconate de manganèse dans une concentration de 3 mg à 15 mg, de manière préférentielle dans une concentration de 5 mg à 11 mg, et/ou
- de l'acide pantothénique dans une concentration de 1,5 mg à 8 mg, de manière préférentielle dans une concentration de 2 mg à 4 mg, et/ou
- de la vitamine A dans une concentration de 3 mg à 10 mg, de manière préférentielle dans une concentration de 5 mg à 8 mg, et/ou
- un émulsifiant, par exemple de la lécithine de soja dans une concentration de 1 mg à 5 mg, de manière préférentielle dans une concentration de 1,5 mg à 4 mg, et/ou
- de la vitamine B6 dans une concentration de 0,5 mg à 5 mg, de préférence dans une concentration de 1 mg à 4 mg, et/ou
- de la vitamine B1 dans une concentration de 0,4 mg à 4 mg, de manière préférentielle dans une concentration de 0,7 mg à 1,5 mg, et/ou
- de la vitamine B12 dans une concentration de 200 µg à 1,2 mg, de préférence dans une concentration de 400 µg à 800 µg, et/ou
- de l'acide folique dans une concentration de 50 µg à 400 µg, de manière préférentielle dans une concentration de 100 µg à 300 µg, et/ou
- de l'iodure de potassium dans une concentration de 30 µg à 300 µg, de préférence dans une concentration de 80 µg à 200 µg, et/ou
- du sélénite de sodium dans une concentration de 30 µg à 300 µg, de manière préférentielle dans une concentration de 50 µg à 200 µg, et/ou
- de la biotine dans une concentration de 50 µg à 200 µg, de manière préférentielle dans une concentration de 20 µg à 60 µg, et/ou
- de l'acidifiant, par exemple sous forme d'acide citrique, dans une concentration de 20 µg à 100 µg, de manière préférentielle dans une concentration de 30 µg à 70 µg.

11. Composition en poudre selon l'une des revendications 1 à 10, **caractérisée en ce que** sont contenus, pour une quantité en poudre de 100 g,
- de la maltodextrine dans une concentration de 8 g à 20 g, de préférence dans une concentration de 12 g à 17 g, et/ou
- du sucre (sucre de canne) dans une concentration de 5 g à 20 g, de préférence dans une concentration de 10 g à 15 g, et/ou
- du fructose dans une concentration de 1 g à 5 g, de préférence dans une concentration de 2 g à 4 g.

12. Composition en poudre selon l'une des revendications 1 à 11, **caractérisée en ce qu'**est contenue
- soit de la poudre de cacao, de préférence fortement déshuilée, pour obtenir une saveur de type chocolat,
- soit une gousse de vanille Bourbon moulue pour obtenir une saveur de type vanille.
